# FASCICULE DE BREVET EUROPEEN

(11) **EP 0 821 713 B1**
(45) Date de publication et mention de la délivrance du brevet: **03.02.1999**
(21) Numéro de dépôt: 96915069.7
(22) Date de dépôt: 22.04.1996
(51) Int. Cl.: C09D 4/06, C08F 283/01, E01F 9/04, C09D 5/00

(54) **COMPOSITIONS DE PEINTURE ROUTIERE CONTENANT UNE RESINE POLYESTER INSATUREE**
ZUSAMMENSETZUNGEN FÜR STRASSENMARKIERUNG, DIE EIN UNGESÄTTIGTES POLYESTERHARZ ENTHALTEN
ROAD PAINT COMPOSITIONS CONTAINING AN UNSATURATED POLYESTER RESIN

(30) Priorité: 21.04.1995 FR 9505031
(43) Date de publication de la demande: 04.02.1998
(73) Titulaire: LAFARGE MATERIAUX DE SPECIALITES, 92120 Montrouge (FR)
(72) Inventeur: BLOT, Estelle, F-69003 Lyon (FR); STOCK, Claude, F-38460 Soleymieu (FR)
(74) Mandataire: Tilloy, Anne-Marie
(86) Numéro de dépôt international: FR9600610
(87) Numéro de publication internationale: WO9633241

(56) Documents cités:
- EP-A- 0 160 723
- WO-A-94/21960
- FR-A- 1 450 935
- US-A- 4 666 978
- DATABASE WPI Week 8150 Derwent Publications Ltd., London, GB; AN 81-92157d XP002009409 & JP,A,56 141 313 (SUMITOMO CHEMICAL) , 5 Novembre 1981
- DATABASE WPI Week 9409 Derwent Publications Ltd., London, GB; AN 94-068399 XP002009410 & JP,A,06 010 319 (ARAKAWA CHEM IND) , 18 Janvier 1994

## Description

L'invention a pour objet des compositions de peinture destinées à être appliquées sur une surface de route et autoroute pour la réalisation d'une signalisation routière.

Vu l'importance du trafic routier, la signalisation routière par marquage des routes et autoroutes est désormais un instrument de sécurité routière indispensable.

Mais pour être efficace, la signalisation routière par marquage des routes et autoroutes doit satisfaire un certain nombre de critères dont les principaux sont énoncés ci-après :
- la visibilité du marquage routier par l'automobiliste qui doit être aussi bonne de jour que de nuit ;
- la durabilité du marquage routier qui est directement liée à son épaisseur et à ses propriétés mécaniques (résistance à l'usure et aux chocs, l'adhérence sur la surface des routes et la résistance à l'encrassement) ;
- la résistance au glissement du marquage routier car, sinon, il constituerait un danger pour l'usager.

Par ailleurs, la facilité de mise en oeuvre de la composition de peinture routière, la rapidité avec laquelle elle peut être appliquée, et surtout le délai de remise en circulation de la route après marquage sont également des critères essentiels de sélection de la composition de peinture routière.

Actuellement, les applications de compositions de peinture routière sont réalisées sur des surfaces sèches, à des températures ambiantes comprises entre 5 et 40° C. Ceci limite bien entendu la période d'application entre les mois de mars et octobre et les jours d'application aux jours exempts de pluie.
Parmi les compositions de peinture routière actuellement utilisées, on connaît celles renfermant, à titre de liant, une résine polyester insaturée :ces compositions sont habituellement à deux composants et sont applicables à des températures ambiantes sur une surface de route, sans l'utilisation de chauffage de la peinture elle-même et/ou de la surface de la route.
Le principal défaut de ces compositions de peinture routière à base de résine polyester insaturée réside dans le fait qu'elles ne peuvent pas être appliquées par temps de pluie. En effet, quand la chaussée est humide, ces compositions de peinture routière durcissent lentement ou pas du tout, et, en outre, n'adhèrent pas correctement à la chaussée.
Pour surmonter ces problèmes, on a proposé dans le passé, par exemple dans le brevet américain US 3,743,686 de modifier la résine polyester insaturée en y insérant un monomère particulier.
Plus récemment, dans la demande internationale publiée sous le numéro WO94/21960, on a proposé une composition monocomposant de peinture routière comprenant un polyester insaturé, un agent réticulant, au moins un pigment, un agent de suspension, un agent mouillant, des charges, un ou des inhibiteurs de polymérisation, des billes de verre, un catalyseur sous la forme d'une dispersion aqueuse d'un peroxyde de dibenzoyle encapsulé dans un environnement ionique réalisé avec des composés chimiques déterminés, le catalyseur ainsi traité étant fixé sur la surface des billes de verre, un ou plusieurs accélérateurs tels que des sels organiques de cobalt ou la diméthylaniline, et, de préférence, un agent stabilisant vis à vis des rayons ultraviolets (UV).
Mais, comme la demanderesse a pu le constater au travers de nombreuses expérimentations, le durcissement des compositions de peinture routière qui renferment un polyester insaturé est très perturbé (i.e. absence de polymérisation ou retard de polymérisation d'au moins une demi-heure) en présence d'humidité quand les catalyseurs/accélérateurs employés sont choisis parmi les couples :
- peroxyde de dibenzoyle/sels de cobalt ou
- peroxyde de méthyléthylcétone/sels de cobalt ou
- peroxyde de dibenzoyle/diméthylaniline.

C'est pourquoi, la présente invention se propose de fournir de nouvelles compositions de peinture routière, lesdites compositions satisfaisant les différents critères précités, en particulier un temps de durcissement satisfaisant, même lorsqu'elles sont appliquées sur une chaussée humide en une couche de faible épaisseur (i.e. de l'ordre de 1000 microns ou inférieure, et plus généralement de l'ordre de 250 microns).
Par temps de durcissement satisfaisant, la demanderesse entend un temps inférieur ou égal à 15 minutes entre l'application des compositions de peinture routière et la remise en circulation de la route après marquage.

Prise dans son premier aspect, la présente invention a donc pour objet des compositions de peinture routière caractérisées en ce qu'elles renferment comme constituants essentiels, après application :
a) au moins un polyester insaturé ;
b) au moins un monomère insaturé éthyléniquement, à titre de diluant et de comonomère par polymérisation radicalaire du polyester insaturé ;
c) au moins un accélérateur de polymérisation choisi parmi les dérivés de la toluidine, de préférence parmi les dérivés de la paratoluidine, de préférence encore parmi la diéthanol-para-toluidine, la diéthoxy-para-toluidine, la diéthyl-para-toluidine ou un mélange des dérivés précités de la para-toluidine ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche ;
g) des billes de verre ;
h) du peroxyde de dibenzoyle à titre de catalyseur de la réaction de polymérisation du polyester insaturé avec le monomère insaturé éthyléniquement ;
i) ainsi que, éventuellement, un ou plusieurs composés pour répartir le catalyseur sur la surface des billes de verre ;

Les compositions selon la présente invention peuvent être présentées, avant application, sous diverses formes, de préférence en deux ou trois composants, conservés séparément, de préférence encore en deux composants conservés séparément.
Les compositions selon la présente invention, bicomposants, comprennent deux composants conservés séparément, les deux composants étant mélangés en proportions voulues, juste avant l'application de la peinture ou appliqués successivement sur la chaussée, le premier composant renfermant comme constituants essentiels :
a) au moins un polyester insaturé ;
b) au moins un monomère insaturé éthyléniquement, à titre de diluant et de comonomère par polymérisation radicalaire du polyester insaturé ;
c) au moins un accélérateur de polymérisation choisi parmi les dérivés de la toluidine, de préférence parmi les dérivés de la para-toluidine, de préférence encore parmi la diéthanol-para-toluidine, la diéthoxy-para-toluidine, la diéthyl-para-toluidine ou un mélange des dérivés précités de la para-toluidine ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche ;
et le second composant renfermant, comme constituants essentiels :
g) des billes de verre ;
h) du peroxyde de dibenzoyle à titre de catalyseur de la réaction de polymérisation du polyester insaturé avec le monomère insaturé éthyléniquement ;
i) éventuellement, un ou plusieurs composés pour répartir le catalyseur sur la surface des billes de verre ;
j) éventuellement, au moins une charge minérale telle que, par exemple, la cristobalite.

Comme indiqué plus haut, les compositions selon l'invention peuvent être constituées de trois composants conservés séparément, les trois composants pouvant être mélangés en proportions voulues, juste avant l'application de la peinture ou appliqués successivement sur la chaussée. Selon un premier mode de réalisation des compositions tri-composants selon l'invention, le premier composant renferme comme constituants essentiels :
a) au moins un polyester insaturé ;
b) au moins un monomère insaturé éthyléniquement, à titre de diluant et de comonomère par polymérisation radicalaire du polyester insaturé ;
c) au moins un accélérateur de polymérisation choisi parmi les dérivés de la toluidine, de préférence parmi les dérivés de la para-toluidine, de préférence encore parmi la diéthanol-para-toluidine, la diéthoxy-para-toluidine, la diéthyl-para-toluidine ou un mélange des dérivés précités de la para-toluidine ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche ; le second composant renfermant :
g) au moins des billes de verre, traitées ou non, et éventuellement, divers composés organiques ou minéraux ;
et le troisième composant renfermant :
h) du peroxyde de dibenzoyle à titre de catalyseur de la réaction de polymérisation du polyester insaturé avec le monomère insaturé éthyléniquement ;
i) éventuellement, divers composés organiques ou minéraux tels qu'un diluant du peroxyde de dibenzoyle tel que le phtalate de dibutyle ou une charge minérale telle que la cristobalite.
Selon un second mode de réalisation des compositions tri-composants selon l'invention, le premier composant renferme comme constituants essentiels :
a) au moins un polyester insaturé ;
b) au moins un monomère insaturé éthyléniquement, à titre de diluant et de comonomère par polymérisation radicalaire du polyester insaturé ;
c) au moins un accélérateur de polymérisation choisi parmi les dérivés de la toluidine, de préférence parmi les dérivés de la para-toluidine, de préférence encore parmi la diéthanol-para-toluidine, la diéthoxy-para-toluidine, la diéthyl-para-toluidine ou un mélange des dérivés précités de la para-toluidine ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche.
Le second composant renferme :
a) au moins un polyester insaturé ;
b) au moins un monomère insaturé éthyléniquement, à titre de diluant et de comonomère par polymérisation radicalaire du polyester insaturé ;
c) du peroxyde de dibenzoyle à titre de catalyseur de la réaction de polymérisation du polyester insaturé avec le monomère insaturé éthyléniquement ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche ;
g) éventuellement, divers composés organiques ou minéraux tels qu'un diluant du peroxyde de dibenzoyle tel que le phtalate de dibutyle ou une charge minérale telle que la cristobalite.

Le troisième composant renferme :
a) au moins des billes de verre, traitées ou non, et éventuellement, divers composés organiques ou minéraux ;

L'un des constituants essentiels des compositions de peinture routière selon la présente invention est un polyester insaturé. Peuvent être utilisés divers polyesters insaturés (connus de l'homme de l'art) résultant de la polycondensation d'un ou plusieurs polyacides (ou de leur anhydride), l'un d'entre eux au moins étant insaturé, et d'un ou de plusieurs polyalcools tels que le propylène glycol, l'éthylène glycol, le diéthylène glycol, le dipropylène glycol, le néopentylglycol ou le glycérol.
A titre d'exemple de polyacides insaturés, on peut citer les acides maléiques, fumariques, citraconiques, itaconiques et métaconiques.
A titre d'exemple de polyacides saturés, on peut citer les acides ortho-, iso- ou téréphtaliques, adipiques, succiniques, sébaciques ou tétrahydrophtaliques. Comme indiqué plus haut, à la place du polyacide, saturé ou non, on peut utiliser un anhydride de polyacide, par exemple un anhydride des polyacides précités.
Conviennent également à la présente invention les polyvinylesters.

Les polyesters insaturés convenant à l'invention sont généralement présentés en solution dans un monomère insaturé éthyléniquement, qui sert de diluant ainsi que de comonomère. La quantité de solution de polyester insaturé utilisée dans une composition de peinture bi- ou tricomposants est généralement comprise entre 10 et 60 % en poids du premier composant décrit plus haut, de préférence de 15 à 30 %. Par ailleurs, la solution de polyester insaturé comprend généralement de 40 à 70 % en poids de polyester insaturé dans le ou les monomères éthyléniquement insaturés.
Comme indiqué ci-dessus, les compositions de peinture routière selon l'invention renferment également un monomère insaturé éthyléniquement, qui est apporté, pour partie au moins, par la solution de polyester insaturé et si nécessaire, ajouté en complément dans cette composition.
Les monomères insaturés éthyléniquement susceptibles d'être utilisés sont le styrène, le vinyltoluène, le chlorostyrène, le divinylbenzène, l'acétate de vinyle ou un mélange de deux ou plusieurs des monomères précités. Conviennent également à l'invention les monomères acryliques et les oligomères acryliques, mais, dans le souci de préserver l'environnement et en raison de leur caractère irritant et toxique, la demanderesse préfère limiter l'utilisation de ces composés acryliques. Egalement, la demanderesse préfère limiter l'utilisation à titre de diluant du polyester insaturé des composés organiques saturés ou solvants tels que les acétates d'éthyle, de propyle ou de butyle, le toluène, l'acétone, la méthyléthylcétone ou la méthylisobutylcétone.
La teneur en monomères insaturés éthyléniquement, apportés en complément de ceux présents dans la solution de polyester insaturé, peut varier dans de larges limites : elle est de préférence inférieure ou égale à 25 % en poids du premier composant de la composition. De préférence encore, cette teneur est comprise entre 10 et 15 % en poids du premier composant de la composition.
Un autre constituant essentiel des compositions de peinture routière selon la présente invention est un accélérateur de polymérisation, choisi parmi les dérivés de la toluidine, de préférence parmi les dérivés de la para-toluidine, de préférence encore parmi la diéthanol-para-toluidine, la diéthoxy-para-toluidine, la diéthyl-para-toluidine ou un mélange des dérivés précités de la paratoluidine. Dans une composition de peinture bi-ou tricomposants, l'accélérateur de polymérisation est avantageusement utilisé à raison de 0,02 à 1 % en poids calculé sur le premier composant de la composition de peinture routière. De préférence, cette teneur est comprise entre 0,05 et 0,3 %.
Les compositions de peinture routière selon l'invention renferment également un pigment coloré, de préférence de couleur blanche. Le pigment préféré est le dioxyde de titane (anatase ou rutile). La teneur en pigment coloré peut varier dans de larges limites et est fonction du type de pigment utilisé. Quand le pigment choisi est le dioxyde de titane, sa teneur est généralement comprise entre 5 et 25 % en poids du premier composant de la composition.
Les compositions selon l'invention renferment également au moins un composé capable d'exsuder à la surface de la peinture et d'empêcher l'inhibition de la polymérisation par l'oxygène de l'air : un tel composé est de préférence choisi parmi les substances cireuses ayant un point de fusion compris entre 20 et 80°C telles que certaines huiles paraffiniques, paraffines ou cires. Un tel composé est généralement utilisé à raison de 0,05 à 0,5 % en poids du premier composant.

Les compositions de peinture routière selon l'invention peuvent renfermer, de préférence, des charges minérales telles que le carbonate de calcium, la silice, le talc, le sulfate de baryum, le trihydrate d'alumine, la cristobalite, le mica et le kaolin ou un mélange des charges précitées. La teneur en charges minérales peut varier dans de larges limites. Elle est de préférence inférieure ou égale à 70 % en poids du premier composant de la composition de peinture routière ; des teneurs plus importantes pouvant conduire à une diminution importante des propriétés mécaniques. De préférence encore, cette teneur est supérieure ou égale à 20 % en poids du premier composant de la composition de peinture routière.
En revanche, la demanderesse déconseille d'utiliser des phtalates à titre d'agent plastifiant, car en exsudant à la surface de la peinture, ces composés, quand il sont prévus à une teneur suffisante pour remplir le rôle de plastifiant, entraînent l'apparition d'un tack et, en conséquence, diminuent la résistance à l'encrassement. Néanmoins, comme indiqué plus haut, des phtalates peuvent être inclus dans les compositions selon l'invention à titre de diluant du peroxyde de dibenzoyle en faible quantité, généralement inférieure à 1 % en poids du premier composant.
Egalement, la demanderesse déconseille d'introduire dans les compositions selon l'invention, des solvants organiques non réactifs, c'est-à-dire ne renfermant pas d'insaturation éthylénique, comme, par exemple, des alcools, des hydrocarbures aromatiques ou des esters aliphatiques, en raison des inconvénients majeurs qu'ils peuvent apporter comme un retard de la prise de la peinture, un ramollissement du film, une sensibilité du film de peinture aux salissures et des risques de pollution de l'environnement.
Dans le premier composant des compositions selon l'invention à deux ou trois composants, on peut aussi ajouter des additifs conventionnels dans les peintures routières qui sont :
- un (ou plusieurs) inhibiteur de polymérisation en complément du ou des inhibiteurs de polymérisation qui sont normalement prévus avec la résine polyester insaturée. Ces inhibiteurs peuvent être choisis parmi les composés suivants : les éthers de quinone, la parabenzoquinone, la méthylhydroquinone, la méthyléthylhydroquinone, l'éthylhydroquinone, le tertiobutylcatéchol, le ditertiobutylparacrésol ou un mélange des inhibiteurs de polymérisation précités. La teneur en inhibiteur de polymérisation ajouté est généralement inférieure à 0,01 % en poids du premier composant des compositions de peinture routière ;
- un (ou plusieurs) agent stabilisant vis à vis des rayons ultraviolets (UV). A titre d'exemple de tels agents, bien connus de l'homme de l'art, on peut citer les benzotriazoles, les benzophénones, les triazines et les HALS (aminés à fort encombrement stérique, jouant le rôle de capteur de radicaux). La teneur en cet agent est généralement inférieure ou égale à 2 % en poids du premier composant de la peinture routière ;
- un (ou plusieurs) agent épaississant qui peut être choisi parmi les composés suivants : les polyamides, les argiles gonflantes du type bentone, la sépiolite, l'attapulgite et l'huile de ricin hydrogénée. La teneur en cet agent est généralement inférieure ou égale à 2 % en poids du premier composant de la peinture routière.
- un (ou des) agent antimousse ;
- un (ou des) agent épaississant ;
- un (ou des) agent dispersant ;

Comme indiqué plus haut, la préparation des compositions de peinture routière selon la présente invention implique également l'utilisation de billes de verre, du peroxyde de dibenzoyle ainsi que , éventuellement, un (ou plusieurs) composé pour répartir le catalyseur sur la surface des billes de verre. De préférence, le peroxyde de dibenzoyle est sous forme pulvérulente. Par ailleurs, le peroxyde de dibenzoyle représente généralement de l'ordre de 1 à 5 % en poids calculé sur la quantité de polyester insaturé présent dans le premier composant avant réticulation.

La préparation de la signalisation routière à partir des compositions de peinture routière selon l'invention peut s'effectuer simplement, de diverses façons.
De préférence, pour la préparation du premier composant des compositions bi- ou tricomposants, on procède de la façon suivante :
- dans un premier temps, on introduit dans un récipient sous agitation la totalité ou une partie des produits suivants, dans l'ordre : le polyester insaturé (a) en solution dans un monomère insaturé éthyléniquement (b), d'autres composés tels l'inhibiteur de polymérisation, le composé (e) servant de barrière à l'oxygène, chauffé à une température supérieure à sa température de fusion et, le cas échéant, en complément, un ou des monomères insaturés éthyléniquement ;
- ensuite, on ajoute le pigment coloré (d) et, le cas échéant, une ou plusieurs charges minérales (f) de couleur claire et la préparation ainsi obtenue est maintenue sous agitation jusqu'à l'obtention d'un mélange homogène ;
- enfin, on ajoute à ce mélange homogène l'accélérateur de polymérisation (c) et éventuellement un ou plusieurs autres composés tels qu'un agent stabilisant et un agent dispersant si ce dernier n'a pas été introduit auparavant.
La préparation ainsi obtenue est maintenue sous agitation jusqu'à l'obtention d'un mélange homogène, à viscosité ajustée en fonction du moyen utilisé pour l'application afin de maintenir, à un débit constant, une épaisseur d'application constante.
Cette préparation peut être appliquée sur une chaussée, humide ou sèche, à l'aide des moyens usuels (brosse, pistolet pulvérisateur airless et pistolet pneumatique), soit préalablement, juste avant l'application du second composant, et, le cas échéant, du troisième composant, soit après mélange avec le second composant et, le cas échéant, le troisième composant.

Généralement, pour préparer une composition de peinture routière selon l'invention, bicomposants, on mélange de une à deux parties en poids du second composant avec une à deux parties en poids du premier composant.
La composition de peinture routière selon l'invention présente avantageusement une bonne adhérence sur chaussée humide et peut dès lors être appliquée par temps de pluie à des températures ambiantes variables pouvant varier de 5 à 60°C. Avantageusement encore, le durcissement de la peinture selon l'invention après application n'excède pas 20 minutes et est généralement inférieur ou égal à 10 minutes.
Enfin, la composition de peinture routière selon l'invention conduit à une signalisation routière satisfaisant pleinement les critères principaux exigés, à savoir :
- la visibilité aussi bien de jour que de nuit ;
- la durabilité malgré sa faible épaisseur (inférieure ou égale à 500 microns et plus généralement de l'ordre de 250 microns), grâce à ses propriétés mécaniques ;
- la résistance au glissement.

En outre, la composition de peinture routière selon l'invention est :
- facile et rapide à mettre en oeuvre ;
- stable en pots sous les différents conditionnements envisageables (deux ou trois composants conservés séparément) ;
- d'un prix de revient économique.

Les exemples ci-après illustrent la présente invention.

### Exemple 1

On prépare une composition de peinture routière bicomposants comme indiqué ci-avant à partir d'une partie en poids d'un premier composant comprenant (en % en poids) :
- 45 % d'une solution à 65 % +/- 2 % en poids d'un polyester insaturé dans le styrène commercialisée sous la dénomination STERPON BD 39-12 par la société CONVERT ;
- 15 % d'une solution de 69 % en poids d'un polyester insaturé dans le styrène commercialisée sous la dénomination NORSODYNE F 807 par la société CRAY VALLEY ;
- 20 % de dioxyde de titane rutile commercialisé sous la dénomination RHD2 par la société TIOXIDE ;
- 19,6 % de styrène, en complément ;
- 0,3 % de paraffine 50/52 (commercialisée par la société BRITISH PETROLEUM CHEMICAL) chauffée à plus de 50-52°C ;
- 0,1 % de diméthylparatoluidine
et d'une partie en poids d'un second composant comprenant (en % en poids) :
- des billes de verre non traitées, commercialisées sous la dénomination MB1 par la société NOVITEC ;
- 2,5 % de peroxyde de dibenzoyle (rapporté au poids du second composant).

Immédiatement après le mélange des premier et second composants, le mélange obtenu est appliqué au moyen d'un pistolet pulvérisateur (airless) sur une chaussée mouillée.
Cette composition de peinture routière présente un temps de durcissement très satisfaisant de 8 minutes entre son application et la remise en circulation de la route après marquage. En outre, elle présente une bonne adhérence sur chaussée humide : en effet, quand elle est soumise au test à l'arrachement par traction selon la norme NF-T 30 062 après une semaine d'application, on constate une rupture cohésive du support de la peinture routière.

### Exemple 2

On prépare une composition de peinture routière bicomposants comme indiqué ci-avant à partir d'une partie en poids d'un premier composant comprenant (en % en poids) :
- 26,6 % d'une solution à 67 % en poids d'un polyester insaturé dans le styrène commercialisée sous la dénomination NORSODYNE M003 par la société CRAY VALLEY .
- 11,1 % de styrène, en complément ;
- 47,3 % de CaCO₃ commercialisé sous la dénomination CALFORT 1 par la société REVERTE.
- 0,3 % de paraffine 50/52 (commercialisée par la société BRITISH PETROLEUM CHEMICAL) chauffée à plus de 50-52°C ;
- 0,1 % de diéthanolparatoluidine commercialisée sous la dénomination PLEXILITH 492 par la société RÖHM ;
- 14,6 % de dioxyde de titane commercialisé sous la dénomination RCL 388 par la société S.C.M. ;
- 0,003 % d'inhibiteur de polymérisation.
et d'une partie en poids d'un second composant constitué de billes de verre traitées, commercialisées sous la dénomination TECNOPERL SUPER par la société SOVITEC et renfermant du peroxyde de dibenzoyle.

Immédiatement après le mélange des premier et second composants, le mélange obtenu est appliqué au moyen d'un rouleau sur une chaussée mouillée.
Cette composition de peinture routière présente un temps de durcissement très satisfaisant de 5 minutes entre son application et la remise en circulation de la route après marquage. En outre, elle présente une bonne adhérence sur chaussée humide : en effet, quand elle est soumise au test à l'arrachement par traction selon la norme NF-T 30 062 après une semaine d'application, on constate une rupture cohésive du support de la peinture routière.

### Exemple 3

On prépare une composition de peinture routière bicomposants comme indiqué ci-avant à partir d'une partie en poids d'un premier composant comprenant (en % en poids) :
- 19 % d'une solution à 65 % +/- 2 % en poids d'un polyester insaturé dans le styrène commercialisée sous la dénomination STERPON BD 39-12 par la société CONVERT ;
- 7,5 % de styrène, en complément ;
- 53 % de CaCO₃ commercialisée sous la dénomination DURCAL 5 par la société OMYA ;
- 11,6 % de dioxyde de titane commercialisé sous la dénomination RHD2 par la société TIOXIDE ;
- 0,3 % de paraffine 50/52 (commercialisée par la société BRITISH PETROLEUM CHEMICAL) chauffée à plus de 50-52°C ;
- 8,4 % de triméthacrylate de triméthylol propane commercialisé sous la dénomination NORSOCRYL TMPTMA par la société ATOCHEM ;
- 0,003 % d'inhibiteur de polymérisation ;
- 0,1 % d'un agent anti UV à base de benzotriazole commercialisé par la société CIBA GEIGY sous la dénomination TINUVIN 765 ;
- 0,1 % de diéthoxyparatoluidine.
et d'une partie en poids d'un second composant constitué de billes de verre traitées, commercialisées sous la dénomination TECNOPERL SUPER par la société SOVITEC et renfermant du peroxyde de dibenzoyle.

Immédiatement après le mélange des premier et second composants, le mélange obtenu est appliqué au moyen d'un pistolet pulvérisateur (airless) sur une chaussée mouillée.
Cette composition de peinture routière présente un temps de durcissement très satisfaisant de 15 minutes entre son application et la remise en circulation de la route après marquage. En outre, elle présente une bonne adhérence sur chaussée humide : en effet, quand elle est soumise au test à l'arrachement par traction selon la norme NF-T 30 062 après 24 heures d'application, on constate une rupture cohésive du support de la peinture routière.

### Exemple 4 (comparatif)

On prépare une composition de peinture routière bicomposants comme indiqué ci-avant à partir d'une partie en poids d'un premier composant comprenant (en % en poids) :
- 19 % d'une solution à 65 % +/- 2 % en poids d'un polyester insaturé dans le styrène commercialisée sous la dénomination STERPON BD 39-12 par la société CONVERT ;
- 5,6 % de styrène, en complément ;
- 53 % de CaCO₃ commercialisée sous la dénomination DURCAL 5 par la société OMYA ;
- 11,6 % de dioxyde de titane commercialisé sous la dénomination RHD2 par la société TIOXIDE ;
- 0,3 % de paraffine 50/52 (commercialisée par la société BRITISH PETROLEUM CHEMICAL) chauffée à plus de 50-52°C ;
- 8,4 % de triméthacrylate de triméthylol propane commercialisé sous la dénomination NORSOCRYL TMPTMA par la société ATOCHEM ;
- 0,003 % d'inhibiteur de polymérisation ;
- 0,1 % d'un agent anti UV à base de benzotriazole commercialisé par la société CIBA GEIGY sous la dénomination TINUVIN 765 ;
- 2 % d'une solution de 6 % en poids d'octoacte de cobalt dans le white spirit,
et d'une partie en poids d'un second composant comprenant (en % en poids) des billes de verre traitées, commercialisées sous la dénomination TECNOPERL SUPER par la société SOVITEC et renfermant du peroxyde de dibenzoyle.

Immédiatement après le mélange des premier et second composants, le mélange obtenu est appliqué au moyen d'un pistolet pulvérisateur de type "airless", sur une chaussée mouillée.

Cette composition de peinture routière ne parvient pas à polymériser et reste pâteuse pendant une longue période de temps, largement supérieure à 20 minutes.

## Revendications

1. Compositions de peinture routière, caractérisées en ce qu'elles renferment comme constituants essentiels, après application :
a) au moins un polyester insaturé ;
b) au moins un monomère insaturé éthyléniquement, à titre de diluant et de comonomère par polymérisation radicalaire du polyester insaturé ;
c) au moins un accélérateur de polymérisation choisi parmi les dérivés de la toluidine ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche ;
g) des billes de verre ;
h) du peroxyde de dibenzoyle à titre de catalyseur de la réaction de polymérisation du polyester insaturé avec le monomère insaturé éthyléniquement ;
i) ainsi que, éventuellement, un ou plusieurs composés pour répartir le catalyseur sur la surface des billes de verre ;

2. Compositions de peinture routière, comprenant deux composants conservés séparément, les deux composants étant mélangés en proportions voulues, juste avant l'application de la peinture ou appliqués successivement sur la chaussée, le premier composant renfermant comme constituants essentiels :
a) au moins un polyester insaturé ;
b) au moins un monomère insaturé éthyléniquement, à titre de diluant et de comonomère par polymérisation radicalaire du polyester insaturé ;
c) au moins un accélérateur de polymérisation choisi parmi les dérivés de la toluidine ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche ;
et le second composant renfermant, comme constituants essentiels :
g) des billes de verre ;
h) du peroxyde de dibenzoyle à titre de catalyseur de la réaction de polymérisation du polyester insaturé avec le monomère insaturé éthyléniquement ;
i) éventuellement, un ou plusieurs composés pour répartir le catalyseur sur la surface des billes de verre ;
j) éventuellement, au moins une charge minérale.

3. Compositions de peinture routière comprenant trois composants conservés séparément, les trois composants pouvant être mélangés en proportions voulues, juste avant l'application de la peinture ou appliqués successivement sur la chaussée, le premier composant renfermant comme constituants essentiels :
a) au moins un polyester insaturé ;
b) au moins un monomère insaturé éthyléniquement, à titre de diluant et de comonomère par polymérisation radicalaire du polyester insaturé ;
c) au moins un accélérateur de polymérisation choisi parmi les dérivés de la toluidine ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche ;
le second composant renfermant :
g) au moins des billes de verre, traitées ou non, et éventuellement, divers composés organiques ou minéraux ;
et le troisième composant renfermant :
h) du peroxyde de dibenzoyle à titre de catalyseur de la réaction de polymérisation du polyester insaturé avec le monomère insaturé éthyléniquement ;
i) et, éventuellement, divers composés organiques ou minéraux tels qu'un diluant du peroxyde de dibenzoyle tel que le phtalate de dibutyle ou une charge minérale telle que la cristobalite.

4. Compositions de peinture routière comprenant trois composants conservés séparément, les trois composants pouvant être mélangés en proportions voulues, juste avant l'application de la peinture ou appliqués successivement sur la chaussée, le premier composant renfermant comme constituants essentiels :
a) au moins un polyester insaturé ;
b) au moins un monomère insaturé éthyléniquement, à titre de diluant et de comonomère par polymérisation radicalaire du polyester insaturé ;
c) au moins un accélérateur de polymérisation choisi parmi les dérivés de la toluidine ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche ;
le second composant renfermant :
a) au moins un polyester insaturé ;
b) au moins un monomère insaturé éthyléniquement, à titre de diluant et de comonomère par polymérisation radicalaire du polyester insaturé ;
c) du peroxyde de dibenzoyle à titre de catalyseur de la réaction de polymérisation du polyester insaturé avec le monomère insaturé éthyléniquement ;
d) au moins un pigment coloré, de préférence un pigment blanc ;
e) au moins un composé capable d'exsuder à la surface de la peinture et d'empêcher l'inhibition de la polymérisation par l'oxygène de l'air ;
f) éventuellement, au moins une charge minérale de couleur claire, de préférence de couleur blanche.
g) éventuellement, divers composés organiques ou minéraux tels qu'un diluant du peroxyde de dibenzoyle tel que le phtalate de dibutyle ou une charge minérale telle que la cristobalite ;
et le troisième composant renfermant :
a) au moins des billes de verre, traitées ou non, et éventuellement, divers composés organiques ou minéraux ;

5. Compositions selon l'une des revendications 1 à 4, caractérisées en ce que l'accélérateur de polymérisation est choisi parmi les dérivés de la para-toluidine.

6. Compositions selon la revendication 5, caractérisées en ce que l'accélérateur de polymérisation est choisi parmi la diméthyl-para-toluidine, la diéthanol-para-toluidine, la diéthoxy-para-toluidine, la diéthyl-para-toluidine ou un mélange des dérivés précités de la para-toluidine.

7. Compositions selon l'une des revendications 1 à 6, caractérisées en ce que l'accélérateur de polymérisation est utilisé à raison de 0,02 à 1 % en poids calculé sur le premier composant de la composition de peinture routière.

8. Compositions selon la revendication 7, caractérisées en ce que l'accélérateur de polymérisation est utilisé à raison de 0,05 à 0,3 % en poids calculé sur le premier composant de la composition de peinture routière.

9. Compositions selon l'une des revendications 2 à 8 précédentes, caractérisées en ce que la quantité de solution de polyester insaturé utilisée pour préparer le premier composant de la composition de peinture routière selon l'invention est comprise entre 10 et 60 % en poids de ce premier composant, de préférence de 15 à 30 %.

10. Compositions selon l'une des revendications précédentes, caractérisées en ce que les monomères insaturés éthyléniquement sont le styrène, le vinyltoluène, le chlorostyrène, le divinylbenzène, l'acétate de vinyle ou un mélange de deux ou plusieurs des monomères précités.

11. Compositions selon l'une des revendications 2 à 10, caractérisées en ce que la teneur en monomères insaturés éthyléniquement apportés en complément de ceux présents dans la solution de polyesters insaturés est inférieure ou égale à 25 % en poids du premier composant.

12. Compositions selon la revendication 11, caractérisées en ce que cette teneur est comprise entre 10 et 15 % en poids du premier composant.

13. Compositions selon l'une des revendications précédentes, caractérisées en ce que le pigment est le dioxyde de titane.

14. Compositions selon la revendication 13, caractérisées en ce que la teneur en dioxyde de titane est comprise entre 5 et 25 % en poids du premier composant.

15. Compositions selon l'une des revendications 2 à 14 précédentes, caractérisées en ce que la teneur en charges minérales est inférieure ou égale à 70 % en poids du premier composant.

16. Compositions selon la revendication 15, caractérisées en ce que cette teneur est supérieure ou égale à 20 % en poids du premier composant.

17. Compositions selon l'une des revendications précédentes, caractérisées en ce que le composé capable d'exsuder à la surface de la peinture et d'empêcher l'inhibition de la polymérisation par l'oxygène de l'air est choisi parmi les substances cireuses ayant un point de fusion compris entre 20 et 80°C.

18. Compositions selon la revendication 17, caractérisées en ce que ce composé est utilisé à raison de 0,05 à 0,5 % en poids du premier composant.

19. Compositions selon l'une des revendications précédentes, caractérisées en ce que le peroxyde de dibenzoyle représente de l'ordre de 1 à 5 % en poids calculé sur la quantité de polyester insaturé présent avant réticulation.

## Patentansprüche

1. Straßenmarkierungsfarbe-Zusammensetzungen, **dadurch gekennzeichnet**, daß sie als wesentliche Bestandteile nach dem Aufbringen enthalten:
a) mindestens einen ungesättigten Polyester;
b) mindestens ein ethylenisch ungesättigtes Monomer in der Eigenschaft als Verdünnungsmittel und als Comonomer bei der radikalischen Polymerisation des ungesättigten Polyesters;
c) mindestens einen Polymerisationsbeschleuniger, ausgewählt aus den Derivaten von Toluidin;
d) mindestens ein Farbpigment, vorzugsweise ein Weißpigment;
e) mindestens eine Verbindung, die an der Oberfläche der Farbe ausschwitzen und die Hemmung der Polymerisation durch Luftsauerstoff verhindern kann;
f) gegebenenfalls mindestens einen mineralischen Füllstoff mit heller Farbe, vorzugsweise mit weißer Farbe;
g) Glaskugeln;
h) Dibenzoylperoxid in der Eigenschaft als Katalysator der Polymerisationsreaktion des ungesättigten Polyesters mit dem ethylenisch ungesättigten Monomer;
i) sowie gegebenenfalls eine oder mehrere Verbindungen zum Verteilen des Katalysators auf der Oberfläche der Glaskugeln.

2. Straßenmarkierungsfarbe-Zusammensetzungen, umfassend zwei getrennt aufbewahrte Komponenten, wobei die beiden Komponenten im gewünschten Verhältnis unmittelbar vor dem Aufbringen der Farbe vermischt werden oder nacheinander auf die Straße aufgebracht werden, wobei die erste Komponente als wesentliche Bestandteile enthält:
a) mindestens einen ungesättigten Polyester;
b) mindestens ein ethylenisch ungesättigtes Monomer in der Eigenschaft als Verdünnungsmittel und als Comonomer bei der radikalischen Polymerisation des ungesättigten Polyesters;
c) mindestens einen Polymerisationsbeschleuniger, ausgewählt aus den Derivaten von Toluidin;
d) mindestens ein Farbpigment, vorzugsweise ein Weißpigment;
e) mindestens eine Verbindung, die an der Oberfläche der Farbe ausschwitzen und die Hemmung der Polymerisation durch Luftsauerstoff verhindern kann;
f) gegebenenfalls mindestens einen mineralischen Füllstoff mit heller Farbe, vorzugsweise mit weißer Farbe;
und wobei die zweite Komponente als wesentliche Bestandteile enthält:
g) Glaskugeln;
h) Dibenzoylperoxid in der Eigenschaft als Katalysator der Polymerisationsreaktion des ungesättigten Polyesters mit dem ethylenisch ungesättigten Monomer;
i) gegebenenfalls eine oder mehrere Verbindungen zum Verteilen des Katalysators auf der Oberfläche der Glaskugeln;
j) gegebenenfalls mindestens einen mineralischen Füllstoff.

3. Straßenmarkierungsfarbe-Zusammensetzungen, umfassend drei getrennt aufbewahrte Komponenten, wobei die drei Komponenten im gewünschten Verhältnis unmittelbar vor dem Aufbringen der Farbe vermischt werden können oder nacheinander auf die Straße aufgebracht werden können, wobei die erste Komponente als wesentliche Bestandteile enthält:
a) mindestens einen ungesättigten Polyester;
b) mindestens ein ethylenisch ungesättigtes Monomer in der Eigenschaft als Verdünnungsmittel und als Comonomer bei der radikalischen Polymerisation des ungesättigten Polyesters;
c) mindestens einen Polymerisationsbeschleuniger, ausgewählt aus den Derivaten von Toluidin;
d) mindestens ein Farbpigment, vorzugsweise ein Weißpigment;
e) mindestens eine Verbindung, die an der Oberfläche der Farbe ausschwitzen und die Hemmung der Polymerisation durch Luftsauerstoff verhindern kann;
f) gegebenenfalls mindestens einen mineralischen Füllstoff mit heller Farbe, vorzugsweise mit weißer Farbe;
wobei die zweite Komponente enthält:
g) mindestens Glaskugeln, die behandelt oder unbehandelt sind, und gegebenenfalls verschiedene organische oder mineralische Verbindungen;
wobei die dritte Komponente enthält:
h) Dibenzoylperoxid in der Eigenschaft als Katalysator der Polymerisationsreaktion des ungesättigten Polyesters mit dem ethylenisch ungesättigten Monomer;
i) und gegebenenfalls verschiedene organische oder mineralische Verbindungen wie etwa ein Verdünnungsmittel von Dibenzoylperoxid, wie etwa Dibutylphthalat, oder einen mineralischen Füllstoff wie etwa Cristobalit.

4. Straßenmarkierungsfarbe-Zusammensetzungen umfassend drei getrennt aufgebewahrte Komponenten, wobei die drei Komponenten im gewünschten Verhältnis unmittelbar vor dem Aufbringen der Farbe vermischt werden oder nacheinander auf die Straße aufgebracht werden können, wobei die erste Komponente als wesentliche Bestandteile enthält:
a) mindestens einen ungesättigten Polyester;
b) mindestens ein ethylenisch ungesättigtes Monomer in der Eigenschaft als Verdünnungsmittel und als Comonomer bei der radikalischen Polymerisation des ungesättigten Polyesters;
c) mindestens einen Polymerisationsbeschleuniger, ausgewählt aus den Derivaten von Toluidin;
d) mindestens ein Farbpigment, vorzugsweise ein Weißpigment;
e) mindestens eine Verbindung, die an der Oberfläche der Farbe ausschwitzen und die Hemmung der Polymerisation durch Luftsauerstoff verhindern kann;
f) gegebenenfalls mindestens einen mineralischen Füllstoff mit heller Farbe, vorzugsweise mit weißer Farbe;
wobei die zweite Komponente enthält:
a) mindestens einen ungesättigten Polyester
b) mindestens ein ethylenisch ungesättigtes Monomer in der Eigenschaft als Verdünnungsmittel und als Comonomer bei der radikalischen Polymerisation des ungesättigten Polyesters;
c) Dibenzoylperoxid in der Eigenschaft als Katalysator der Polymerisationsreaktion des ungesättigten Polyesters mit dem ethylenisch ungesättigten Monomer;
d) mindestens ein Farbpigment, vorzugsweise ein Weißpigment;
e) mindestens eine Verbindung, die an der Oberfläche der Farbe ausschwitzen und die Hemmung der Polymerisation durch Luftsauerstoff verhindern kann;
f) gegebenenfalls mindestens einen mineralischen Füllstoff mit heller Farbe, vorzugsweise mit weißer Farbe;
g) gegebenenfalls verschiedene organische oder mineralische Verbindungen wie etwa ein Verdünnungsmittel von Dibenzoylperoxid wie etwa Dibutylphthalat oder einen mineralischen Füllstoff wie etwa Cristobalit;
und wobei die dritte Komponente enthält:
a) mindestens Glaskugeln, die behandelt oder unbehandelt sind, und gegebenenfalls verschiedene organische oder mineralische Verbindungen;

5. Zusammensetzungen nach einem der Ansprüche 1 bis 4, **dadurch gekennzeichnet**, daß der Polymerisationsbeschleuniger aus den Derivaten von para-Toluidin ausgewählt ist.

6. Zusammensetzungen nach Anspruch 5, **dadurch gekennzeichnet**, daß der Polymerisationsbeschleuniger ausgewählt ist aus Dimethyl-para-toluidin, Diethanol-para-toluidin, Diethoxy-para-toluidin, Diethyl-para-toluidin oder einem Gemisch der vorstehend genannten Derivate von para-Toluidin.

7. Zusammensetzungen nach einem der Ansprüche 1 bis 6, **dadurch gekennzeichnet**, daß der Polymerisationsbeschleuniger in einer Menge von 0,02 bis 1 Gew.-%, bezogen auf die erste Komponente der Straßenmarkierungsfarbe-Zusammensetzung, verwendet wird.

8. Zusammensetzungen nach Anspruch 7, **dadurch gekennzeichnet**, daß der Polymerisationsbeschleuniger in einer Menge von 0,05 - 0,3 Gew.- %, bezogen auf die erste Komponente der Straßenmarkierungsfarbe-Zusammensetzung, verwendet wird.

9. Zusammensetzungen nach einem der vorangehenden Ansprüche 2 bis 8, **dadurch gekennzeichnet**, daß die Menge der Lösung des ungesättigten Polyesters, die zum Herstellen der ersten Komponente der erfindungsgemäßen Straßenmarkierungsfarbe-Zusammensetzung verwendet wird, zwischen 10 und 60 Gew.-% der ersten Komponente, vorzugsweise 15 bis 30 % beträgt.

10. Zusammensetzungen nach einem der vorangehenden Ansprüche, **dadurch gekennzeichnet**, daß es sich bei den ethylenisch ungesättigten Monomeren um Styrol, Vinyltoluol, Chlorstyrol, Divinylbenzol, Vinylacetat oder ein Gemisch aus zwei oder mehreren der vorstehend genannten Monomere handelt.

11. Zusammensetzungen nach einem der Ansprüche 2 bis 10, **dadurch gekennzeichnet**, daß der Gehalt an ethylenisch ungesättigten Monomeren, die als Ergänzung zu denjenigen, die in der Lösung der ungesättigten Polyester vorhanden sind, zugeführt werden, 25 Gew.-% der ersten Komponente oder weniger beträgt.

12. Zusammensetzungen nach Anspruch 11, **dadurch gekennzeichnet**, daß dieser Gehalt zwischen 10 und 15 Gew.-% der ersten Komponente liegt.

13. Zusammensetzungen nach einem der vorangehenden Ansprüche, **dadurch gekennzeichnet**, daß das Pigment Titandioxid ist.

14. Zusammensetzungen nach Anspruch 13, **dadurch gekennzeichnet**, daß der Titandioxidgehalt zwischen 5 und 25 Gew.-% der ersten Komponente liegt.

15. Zusammensetzungen nach einem der vorangehenden Ansprüche 2 - 14, **dadurch gekennzeichnet**, daß der Gehalt an mineralischen Füllstoffen 70 Gew.-% der ersten Komponente oder weniger beträgt.

16. Zusammensetzungen nach Anspruch 15, **dadurch gekennzeichnet**, daß dieser Gehalt 20 Gew.-% der ersten Komponente oder mehr beträgt.

17. Zusammensetzungen nach einem der vorangehenden Ansprüche, **dadurch gekennzeichnet**, daß die Verbindung, die an der Oberfläche der Farbe ausschwitzen und die Hemmung der Polymerisation durch Luftsauerstoff verhindern kann, ausgewählt ist aus wachsartigen Substanzen mit einem Schmelzpunkt zwischen 20 und 80° Celcius.

18. Zusammensetzungen nach Anspruch 17, **dadurch gekennzeichnet**, daß die Verbindung in einer Menge von 0,05 bis 0,5 Gew.-% der ersten Komponente verwendet wird.

19. Zusammensetzungen nach einem der vorangehenden Ansprüche, **dadurch gekennzeichnet**, daß das Dibenzoylperoxid in einer Größenordnung von 1 bis 5 Gew.-%, bezogen auf die Menge des vor der Vernetzung vorhandenen ungesättigten Polyesters, vorliegt.

## Claims

1. Road paint compositions characterized in that they contain as essential constituents, after application:
a) at least one unsaturated polyester;
b) at least one ethylenically unsaturated monomer, as diluent and as comonomer for radical polymerization of the unsaturated polyester;
c) at least one polymerization accelerator chosen from toluidine derivatives;
d) at least one coloured pigment, preferably a white pigment;
e) at least one compound capable of being exuded at the surface of the paint and of preventing the inhibition of polymerization by the oxygen in air;
f) optionally at least one light-coloured inorganic filler, preferably white-coloured;
g) glass beads;
h) dibenzoyl peroxide as catalyst for the polymerization reaction of the unsaturated polyester with the ethylenically unsaturated monomer;
i) as well as, optionally, one or more compounds for distributing the catalyst over the surface of the glass beads.

2. Road paint compositions including two components kept separately, the two components being mixed in desired proportions just before the application of the paint or applied successively to the roadway, the first component containing as essential constituents:
a) at least one unsaturated polyester;
b) at least one ethylenically unsaturated monomer as diluent and as comonomer for radical polymerization of the unsaturated polyester;
c) at least one polymerization accelerator chosen from toluidine derivatives;
d) at least one coloured pigment, preferably a white pigment;
e) at least one compound capable of being exuded at the surface of the paint and of preventing the inhibition of polymerization by the oxygen in air;
f) optionally, at least one light-coloured inorganic filler, preferably white-coloured;
and the second component containing, as essential constituents:
g) glass beads;
h) dibenzoyl peroxide as catalyst for the polymerization reaction of the unsaturated polyester with the ethylenically unsaturated monomer; and
i) optionally one or more compounds for distributing the catalyst over the surface of the glass beads;
j) optionally at least one inorganic filler.

3. Road paint compositions including three components kept separately, it being possible for the three components to be mixed in desired proportions just before the application of the paint or applied successively to the roadway, the first component containing as essential constituents.
a) at least one unsaturated polyester;
b) at least one ethylenically unsaturated monomer, as diluent and as comonomer for radical polymerization of the unsaturated polyester;
c) at least one polymerization accelerator chosen from toluidine derivatives;
d) at least one coloured pigment, preferably a white pigment;
e) at least one compound capable of being exuded at the surface of the paint and of preventing the inhibition of polymerization by the oxygen in air;
f) optionally at least one light-coloured inorganic filler, preferably white-coloured;
the second component containing:
g) at least glass beads, treated or otherwise, and optionally various organic or inorganic compounds;
and the third component containing:
h) dibenzoyl peroxide as catalyst for the polymerization reaction of the unsaturated polyester with the ethylenically unsaturated monomer; and
i) optionally various organic or inorganic compounds such as a diluent for dibenzoyl peroxide, such as dibutyl phthalate or an inorganic filler such as cristobalite.

4. Road paint compositions including three components kept separately, it being possible for the three components to be mixed in desired proportions just before the application of the paint or applied successively to the roadway, the first component containing as essential constituents:
a) at least one unsaturated polyester;
b) at least one ethylenically unsaturated monomer, as diluent and as comonomer for radical polymerization of the unsaturated polyester;
c) at least one polymerization accelerator chosen from toluidine derivatives;
d) at least one coloured pigment, preferably a white pigment;
e) at least one compound capable of being exuded at the surface of the paint and of preventing the inhibition of polymerization by the oxygen in air;
f) optionally at least one light-coloured inorganic filler, preferably white-coloured;
the second component containing:
a) at least one unsaturated polyester;
b) at least one ethylenically unsaturated monomer, as diluent and as comonomer for radical polymerization of the unsaturated polyester;
c) dibenzoyl peroxide as catalyst for the polymerization reaction of the unsaturated polyester with the ethylenically unsaturated monomer;
d) at least one coloured pigment, preferably a white pigment;
e) at least one compound capable of being exuded at the surface of the paint and of preventing the inhibition of polymerization by the oxygen in air;
f) optionally at least one light-coloured inorganic filler, preferably white-coloured;
g) optionally various organic or inorganic compounds such as a diluent for dibenzoyl peroxide such as dibutyl phthalate or an inorganic filler such as cristobalite;
and the third component containing;
a) at least glass beads, treated or otherwise and, optionally, various organic or inorganic compounds.

5. Compositions according to one of Claims I to 4, characterized in that the polymerization accelerator is chosen from para-toluidine derivatives.

6. Compositions according to Claim 5, characterized in that the polymerization accelerator is chosen from, dimethyl-para-toluidine, diethanol-para-toluidine, diethoxy-para-toluidine, diethyl-para-toluidine or a mixture of the abovementioned para-toluidine derivatives.

7. Compositions according to one of Claims 1 to 6, characterized in that the polymerization accelerator is employed in a proportion of 0.02 to 1 % by weight calculated on the first component of the road paint composition.

8. Compositions according to Claim 7, characterized in that the polymerization accelerator is employed in a proportion of 0.05 to 0.3 % by weight calculated on the first component of the road paint composition.

9. Compositions according to one of the preceding Claims 2 to 8, characterized in that the quantity of unsaturated polyester solution employed for preparing the first component of the road paint composition according to the invention is between 10 and 60 % by weight of this first component, preferably from 15 to 30 %.

10. Compositions according to one of the preceding claims, characterized in that the ethylenically unsaturated monomers are styrene, vinyltoluene, chlorostyrene, divinylbenzene, vinyl acetate or a mixture of two or more of the abovementioned monomers.

11. Compositions according to one of Claims 2 to 10, characterized in that the content of ethylenically unsaturated monomers introduced as complement of those present in the solution of unsaturated polyesters is lower than or equal to 25 % by weight of the first component.

12. Compositions according to Claim 11, characterized in that this content is between 10 and 15 % by weight of the first component.

13. Compositions according to one of the preceding claims, characterized in that the pigment is titanium dioxide.

14. Compositions according to Claim 13, characterized in that the titanium dioxide content is between 5 and 25 % by weight of the first component.

15. Compositions according to one of the preceding Claims 2 to 14, characterized in that the inorganic filler content is lower than or equal to 70 % by weight of the first component.

16. Compositions according to Claim 15, characterized in that this content is higher than or equal to 20 % by weight of the first component.

17. Compositions according to one of the preceding claims, characterized in that the compound capable of being exuded at the surface of the paint and of preventing the inhibition of polymerization by the oxygen in air is chosen from waxy substances which have a melting point of between 20 and 80°C.

18. Compositions according to Claim 17, characterized in that this compound is employed in a proportion of 0.05 to 0.5 % by weight of the first component.

19. Compositions according to one of the preceding claims, characterized in that dibenzoyl peroxide represents of the order of 1 to 5 % by weight, calculated on the quantity of unsaturated polyester present before crosslinking.
